# EUROPEAN PATENT APPLICATION

(11) **EP 1 343 077 A1**
(43) Date of publication of application: **10.09.2003**
(21) Application number: 01811168.2
(22) Date of filing: 03.12.2001
(51) Int. Cl.: G06F 9/44

(54) **Process and system for presenting help information in a data processing system**

(71) Applicant: ABB RESEARCH LTD., 8050 Zürich (CH)
(72) Inventor: Karhu, Katja, 5405 Baden (CH); Gelle, Esther, 8965 Berikon (CH); Le, Julien, 1008 Prilly (CH); Riffel, Michael, 76709 Kronau (DE); Schepik, Viktor, 73579 Schechingen (DE)
(74) Representative: ABB Patent Attorneys

(57) **Abstract**

The invention is directed to a process for a context and user role sensitive presentation of help information in a data processing system, said help information invoked by a user, comprising the following steps: Determining a present context in which the data processing system is at the time point of help invocation; Determining, in which user role the user is registered with the data processing system; Retrieving suitable help information in a help database, depending on the determined present context and the determined user role; and Presenting said suitable help information to the user. The invention is also directed to a system for such a help functionality.

## Description

### Technical field of the invention

The invention is directed to a Process for a context and user role sensitive presentation of help information and a context and user role sensitive help system for a data processing system.

### State of the Art

User help or guidance systems have long been known in the field of program design. They may be invoked by the user and will represent information in regards to the program for which they are implemented. Some programs have their own help systems, other employ a centralized help system implemented in the operating system. Well known examples of centralized help systems are the "man" program of UNIX, and the "HelpViewer" in MacOSX. Classical examples for built in help systems are the "-h" or "-?" options with which many command line programs on different operating systems like VMS or UNIX may be invoked.

User guidance, e.g. help functionality, may in more advanced programs also be provided based on context sensitivity. This means that different parts of the help files are presented to the user based on the information, which functionality of the application the user is currently using. Such a system can for example be achieved, if each program's subfunctionality/subroutine sets an indicator variable to a given value when being invoked by the user (e.g. through a graphical menu choice). This value will then be retrieved by the help systems and be used for determining which part of the information should be presented to the user. Examples for such context sensitive help systems may be found in US 5 535 323 and US 5 287 448.

The help information itself may be stored in a database, a contiguous text file with link marks, or a hierarchical system of linked files, like HTML files. Each element of help information consists of a help object containing the help data itself, i.e. those information that should be presented, and meta information like a context value, a link to a parent/child information, or other information.

All available help systems do however not take into account the context in which the user interacts with the system or a particular program. There are e.g. differences in the skill level of different users, or the task a user is performing, may substantially differ from the task another user is performing. A user may act as the administrator of a program or system, or he/she might simply use it for daily work. Other users might be programmers who's informational needs vary substantially from those of the other kinds of users mentioned before.

Such differences in what one might call a "user role" have hitherto not been considered in help systems and user guidance, and have led to help information being unadapted to the user's trues needs at a given time and context. It is therefore the object of the present invention to provide users with help information better fine tuned to their particular needs.

### Description of the invention

This object is solved by the provision of a process for a context and user role sensitive presentation of help information in a data processing system according to claim 1, and a context and user role sensitive help system for a data processing system according to independent claim 8. Further advantageous aspects, details and embodiments of the present invention will become evident from the dependent claims and the description.

The invention is based on the idea to not only consider a context of a program or system, a user is using when invoking the help system, but to also consider a user role, for determining which particular help information the user should be provided with.

In a first aspect, the invention is therefore directed to a process for a context and user role sensitive presentation of help information in a data processing system, said help information invoked by a user, comprising the following steps:
- Determining a present context in which the data processing system is at the time point of help invocation;
- Determining in which user role the user is registered with the data processing system;
- Retrieving suitable help information in a help database, depending on the determined present context and the determined user role; and
- Presenting said suitable help information to the user.

A user is a person interacting with the data processing system, typing or otherwise inputting data and commands to the data processing system, and percepting information presented to him.

The data processing system may be any digital device on which an operating system and/or applications may run, and which is able to present help information to a user, be it by textual output or a graphical output means.

The invocation of the help information may be performed by any of the means known in the art, e.g. mouse clicking on the "help" menu point of the menu of a program having a graphical user interface, or "typing in" a help command/option in a command line program. Of course, other means of invoking, like speech input, should also be comprised in this invention.

A help database may, according to the invention, be any collection of help information, e.g. help information chunks stored in a relational or object oriented database, a text or multimedia file, a hypertext document or set of documents etc.

The suitable help information of the invention is a help information which fit the context of the program as well as the user role at the time of invocation. Any help information must be considered as comprising at least a help object, having the very help information in textual and/or graphical and/or audible form, and meta information for indicating context(s) and user role(s) for which it is appropriate.

The "present context" as used here is to be understood as a particular state of the data processing system at the time of help invocation. This state may be considered on operating system level or user application level. In particular, the present context may be determined by means of a program or program module used by the user, a state of the program used by the user, a command sequence inputted by the user, a menu choice of a program object having a graphical user interface selected by the user, a pointer position of pointer movement with a graphical user interface, at least one device usable by the data processing system, or combinations thereof.

Of course, other approaches for determining the present context may also be considered and should be comprised in the scope of the invention. For example, the context may further be determined by a help information which is presently presented to the user. By this, it can be assured that the user will continue to receive help information correct with regard to the user role, when navigation through hyperlinked help information, where different help information chunks will be presented at user's disposition.

With regard to the user role, several approaches may be used as well. In one preferred embodiment of the invention, the user role may be determined by means of an operating system user identification for the user. In multi user operating systems like MVS, VMS, UNIX, or Windows NT, users are differentiated through a user ID, under which the user must log into the system, and under which a user will be known to the system throughout a session. Different users may have different "rights" of access to the system. E.g., there may be super users with unlimited access, administrators with administrative rights, and normal users. Depending on this information, a role for a user may be "guessed", e.g. when logged in as an administrator, the system may assume that the focus of the user's work may right now be administration of the operating system or a program. Also different skill levels may be assumed, so that normal users may be presented with more basic information, while administrators might get more advanced information.

Alternatively, or additionally, the user role may be determined by means of an input of the user at the start of a program, in which or for which the help information should be presented. In particular, if only single programs are to be supported by the help system and process according to the invention, or in case a finer "granularity" then a user ID shall be used, it could also be devised to provide a user role distinction within a program. In such cases, the user role should be defined by the user when the program is invoked. For example, the user can be presented with a dialog box into which he either types in a user name, or may select a role from a choice of roles. Further, provisions may be arranged for the user to change his or her role during a session with a particular program, e.g. by reinvoking the dialog box or by typing in some command associated with such a functionality.

As mentioned above, there a several approaches for storing the data required by the help system. One preferred embodiment of the invention may be characterised in that said help information consists of a plurality of information elements connected with a linking system and being used for different user roles and/or contexts, thereby being able of providing an information suitable for a user role and/or a present context. As already mentioned, other ways to store the information, e.g. in a database, are also considered.

The information elements may comprise:
at least one help object containing information on a particular topic;
an information on at least one context, in which it may be presented; and
an information on at least one user role, for which it may be presented. This is the basic set of data required for each of the information elements in order to properly being accessible for use in the process according to the present invention.

In particular embodiments, the information elements may be linked in a hierarchical manner, wherein the information on a context and /or the information on a user role contained in an information element, is a reference to the respective information of an information element being parent to said information element. This is essentially an object oriented approach for organising the information elements, in which a child object inherits properties from its parent object, unless they are overwritten by information contained in the child object. In a simple embodiment of this variation, the reference is simply the designation of the parent information element, so that the system executing the inventive process may then look up (recursively) the required information in that parent information element.

The invention is further directed to a help system, in particular to a help system which may execute the above detailed process. Therefore, everything that was said with regard to the above process, will also apply to the system, so that the description of the inventive process is referred to and incorporated in the description of the inventive system, and vice versa.

Accordingly, the invention is further directed to a context and user role sensitive help system for a data processing system, comprising:
- context means for determining a present context, in which the data processing system is situated at the time of a help invocation;
- role means for determining a user role, as which a user is registered with the data processing system;
- a data base containing help information;
- retrieving means for retrieving suitable help information from the database, depending on the context and the user role determined; and
- presentation means for presenting said help information to the user.

The components of this system act together to allow for a context and user role sensitive help information. Each component has a particular task, which reflects the steps of the inventive process. The data base may be a simple file, a hyperlinked system of files, or a genuine database etc.

The help information preferably consists of a plurality of information elements connected with a linking system and being used for different user roles and/or contexts, thereby being able of providing an information suitable for a user role and/or a present context. The information elements have been specifically adapted for a particular role and/or a particular context.

Under certain circumstance, it might well be that for particular help information, no distinction is made between the different user roles, since a particular information element for a present context might well apply to all user roles. On the other hand, it is also possible that a user role specific information does not depend on a particular context, and could therefore de presented regardless of the context. Examples for such context inert information are an index, a general introduction to the different user roles, or a copyright information, provided that different user roles can be expected to use differing parts of a program with different copyrights.

It is further preferred that the information elements comprise:
at least on help object containing information on a particular topic;
an information on at least one context, in which it may be presented; and
an information on the user role, for which it may be presented.

Further, the information elements may also be linked in a hierarchical manner, wherein the information on a context and/or the information on a user role contained in an information element, is a reference to the respective information of an information element being parent to said information element.

Both these embodiments for the structure of the information elements have been discussed above in respect to the process according to the invention.

In principle, such a help system could well be a hardware component specifically laid out for achieving the goal of the invention, being connected to a data processing system to which it supplies the help information. However, in most cases, the system will be a computer program product, the components of which can be loaded at least partly into the main memory of a digital data processing device, and the program components of which can be executed by said digital data processing device.

### Ways to practise the invention

In the following, more specific embodiments, as well as examples for the use of the present invention, shall be highlighted.

The invention discloses a help guidance method and a system utilising user's role and context sensitivity, defined for software applications that are limited by role based access rights or functionality groups. by role defined circumstance, like access rights, each user belongs to a role specific user group, e.g. operator, author, or administrator. Each role is given specific access rights for a specific functionality/intended working field for the software or its components/objects/subfunctionalities. A zser role is recognised when starting an application or entering it (via typing in the user name etc.). This information together with the information on which function is used at the moment of clicking the "Help" button or otherwise invoking help, is used to open the correct place of usage instructions.

The functionality of the help system and process according to the invention is more intelligent than the normal help functionality, because it considers two parameters:
- the role of the user that enters the application (user role)
- the function that is used at the moment of the usage (present context), for example authoring, searching or editing functions.

Based on these two parameters, the system according to the invention automatically opens the correct place of the usage instructions that will be used for guiding the user in his/her actions.

If no function of the software is used when asking for help, the main view of the help is shown, which is a table of content. The table of content may be dynamically generated, based e.g. on the role of the user, e.g. so that said table of content are different for operators and authors, respectively.

To realise the functionality, the usage of multilevel instructions and meta information is preferred. By multilevel instructions, it is meant that the help is constructed from several, hierachically arranged levels of instructions/information. Each element has its parent element of information, except on the main level. This will require that the whole usage by a user is analysed and described with the same multilevel principles.

As a basis for creating the help functionality, each possible action of a user needs to be analysed, in order to clarify who is allowed/expected to perform an operation. The analysis and design of the usage process is documented using several levels of process maps, which may inhibit the role information from previous, higher levels of help information. Hence, the multilevel help information elements created based on such an analysis also inherit the user role information from a parent to its child. For example, if an authoring function is limited to those people who have authoring rights, help on authoring the links and authoring documents (two possible subitems of help information if the program onto which the inventive help system shall be applied, handles links and documents) will only be presented to those people with an authoring role as well.

The roles can be changed in each of the levels separately, e.g. operators who normally do not have authoring rights may be specified to author documents, but no other types of information, and hence may receive appropriate help information.

The meta information, mentioned above, for each information element, preferably comprises:
- The name of the functionality;
- all the roles that can perform the described functionality (and which should therefore get help on that functionality); and
- a parent to each of the functionalities.

This includes e.g. these parameters, a designation of people allowed to perform each operation described, and a parameter that is used to identify the described functionality in relation to the functions of the application, e.g. a portal application for the WWW.

The described process and system according to the invention can create advantages e.g. for software applications that are limited in respect to their user access. Typically, this is the case for so called control software, with which plants etc. can be controlled.

## Claims

1. Process for a context and user role sensitive presentation of help information in a data processing system, said help information invoked by a user, comprising the following steps:
- Determining a present context in which the data processing system is at the time point of help invocation;
- Determining, in which user role the user is registered with the data processing system;
- Retrieving suitable help information in a help database, depending on the determined present context and the determined user role; and
- Presenting said suitable help information to the user.

2. Process according to claim 1, **characterised in that** said present context is determined by means of a program or program module used by the user, a state of the program used by the user, a command sequence inputted by the user, a menu choice of a program object having a graphical user interface selected by the user, a pointer position of pointer movement with a graphical user interface, at least one device usable by the data processing system, or combinations thereof.

3. Process according to claim 1 or 2, **characterised in that** the user role is determined by means of an operating system user identification for the user.

4. Process according to claim 1 or 2, **characterised in that** the user role is determined by means of an input of the user at the start of a program, in which or for which the help information should be presented.

5. Process according to any of claims 1 to 4, **characterised in that** said help information consists of a plurality of information elements connected with a linking system and being used for different user roles and/or contexts, thereby being able of providing an information suitable for a user role and/or a present context.

6. Process according to any of claims 1 to 5, **characterised in that** the information elements comprise:
at least one help object containing information on a particular topic;
an information on at least one context, in which it may be presented; and
an information on at least one user role, for which it may be presented.

7. Process according to claim 6, **characterised in that** the information elements are linked in a hierachical manner, and that the information on a context and /or the information on a user role contained in an information element, is a reference to the respective information of an information element being parent to said information element.

8. Context and user role sensitive help system for a data processing system, comprising:
- context means for determining a present context, in which the data processing system is situated at the time of a help invocation;
- role means for determining a user role, as which a user is registered with the data processing system;
- a data base containing help information;
- retrieving means for retrieving suitable help information from the database, depending on the context and the user role determined; and
- presentation means for presenting said help information to the user.

9. Help system according to claim 8, **characterised in that** said help information consists of a plurality of information elements connected with a linking system and being used for different user roles and/or contexts, thereby being able of providing an information suitable for a user role and/or a present context.

10. Help system according to claim 8 or 9, **characterised in that** the information elements comprise:
at least on help object containing information on a particular topic;
an information on at least one context, in which it may be presented; and
an information on the user role, for which it may be presented.

11. Help system according to claim 10, **characterised in that** the information elements are linked in a hierachical manner, and that the information on a context and /or the information on a user role contained in an information element, is a reference to the respective information of an information element being parent to said information element.

12. Help system according to any of claims 8 to 11, **characterised in that** it is a computer program product, the components of which can be loaded at least partly into the main memory of a digital data processing device, and the program components of which can be executed by said digital data processing device.
